# EUROPÄISCHE PATENTSCHRIFT

(11) **EP 2 976 275 B1**
(45) Veröffentlichungstag und Bekanntmachung des Hinweises auf die Patenterteilung: **19.07.2017**
(21) Anmeldenummer: 14710305.5
(22) Anmeldetag: 17.03.2014
(51) Int. Cl.: B65G 1/137

(54) **AUTOMATISIERTER KOMMISSIONIERPLATZ UND ENTSPRECHENDES VERFAHREN**
AUTOMATED ORDER-PICKING LOCATION AND CORRESPONDING METHOD
ZONE AUTOMATISÉE DE PRÉPARATION DE COMMANDES ET PROCÉDÉ CORRESPONDANT

(30) Priorität: 18.03.2013 DE 102013005116
(43) Veröffentlichungstag der Anmeldung: 27.01.2016
(73) Patentinhaber: SSI Schäfer Automation GmbH, 8051 Graz-Gösting (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2014/055252
(87) Internationale Veröffentlichungsnummer: WO 2014/147007

(56) Entgegenhaltungen:
- EP-A1- 1 099 652
- EP-A1- 1 710 174
- WO-A1-2012/147261
- WO-A1-2013/090969
- DE-A1-102011 018 983
- US-A1- 2005 186 053

## Beschreibung

Die vorliegende Erfindung betrifft einen Kommissionierplatz und ein Verfahren zum manuellen Kommissionieren von Artikeln aus sortenrein oder fachunterteilt sortenrein beladenen Lagerbehältern in zumindest einen Auftragsbehälter gemäß einem Kommissionierauftrag, der aus mehreren verschiedenen Artikeln bestehen kann. Die Erfindung betrifft ferner ein Kommissioniersystem mit einem derartigen Kommissionierplatz. Die Erfindung arbeitet nach dem Prinzip "Ware-zum-Mann".

Das europäische Patent EP 0 847 939 B2 offenbart einen in einer Regalgasse zwischen zwei Regalen eines AKL-Systems (AKL = automatisiertes Kleinteilelager) angeordneten gattungsgemäßen Kommissionierplatz. Ein Kommissionierer entnimmt dort Artikel aus Lagerbehältern, die entlang einer Vorderseite der Regale in Durchlaufkanälen angedient werden, wobei sich die Durchlaufkanäle in einer Querrichtung der Regale erstrecken. Es gibt Durchlaufkanäle für sogenannte Schnellläufer und Durchlaufkanäle für sogenannte Langsamläufer. Als Schnellläufer werden Artikel bezeichnet, die in Kommissionieraufträgen häufiger bzw. in größeren Mengen benötigt werden, während Langsamläufer solche Artikel sind, die selten bzw. in kleinen Mengen benötigt werden. Die EP 0 847 939 B2 beschreibt ein sogenanntes "Piece-Picking-Verfahren", bei dem einzelne Stückgüter aus größeren Gebinden zwecks Kommissionierung entnommen werden.

Ferner beschreibt die EP 0 847 939 B2, dass eine Auftragsbehälter-Rollenbahn entlang der Längsseite (Vorderseite) des Regals in Hüfthöhe der Kommissionierperson verläuft. Die Kommissionierperson kann den Auftragsbehälter mit sich führen (d.h. Schieben), während sie einen Kommissionierbereich (Teilbereich der Vorderseite des Regals) abschreitet. Schnellläufer-Durchlaufkanäle werden permanent mit mehreren Schnellläufer-Lagerbehältern mittels eines Regalbediengeräts (nachfolgend "RBG" genannt) gefüllt, welches entlang einer Rückseite des Regals verfahrbar ist. Sobald ein Schnellläufer-Lagerbehälter leer ist, wird er von der Kommissionierperson manuell aus dem entsprechenden Durchlaufkanal entnommen, indem die Kommissionierperson den Behälter anhebt und durch die Luft auf die Auftragsbehälter-Rollenbahn umsetzt, auf der üblicherweise die Auftragsbehälter transportiert werden. Leere Schnellläufer-Lagerbehälter fahren also durch den gesamten Kommissionierbereich, bis sie an einen Knotenpunkt gelangen, von wo aus sie an einen Lagerbehälter-Befüllpunkt zur erneuten Einlagerung in das Regal verbracht werden. Langsamläufer-Durchlaufkanäle zeichnen sich dadurch aus, dass sie als Gefällebahnen ausgebildet sind und immer nur einen Langsamläufer-Lagerbehälter vorrätig halten. Der Langsamläufer-Durchlaufkanal weist eine Sperreinrichtung auf, so dass ein fertig bearbeiteter Langsamläufer-Lagerbehälter von der Kommissionierperson händisch nach hinten in Richtung der Rückseite des Regals zurückgeschoben werden kann und dann durch die Sperreinrichtung dort gehalten wird. Im Gegensatz zu den Schnellläufer-Durchlaufkanälen werden die Langsamläufer-Durchlaufkanäle also bidirektional betrieben. In der zurückgeschobenen, gesperrten Position ist es möglich, dass das RBG den Langsamläufer-Lagerbehälter abholt und durch einen neuen (anderen) Langsamläufer-Lagerbehälter ersetzt, den das RBG aus einem entfernten Lager geliefert bekommt.

Dieser herkömmliche Kommissionierplatz, der eigentlich in ein (Lager-) Regal integriert ist und mit einer zusätzlichen (Auftragsbehälter-) Fördereinrichtung versehen ist, die sich entlang der Längsseite des Regals erstreckt, hat eine relativ geringe Kommissionierleistung. Weil die Fördereinrichtung (Rollenbahn) für die Auftragsbehälter durch den Kommissionierbereich verläuft, können weniger Lagerbehälter angedient werden. Da die Schnellläufer-Durchlaufkanäle unterhalb der Rollenbahn für die Auftragsbehälter angeordnet sind, muss sich die Kommissionierperson zum Entfernen von leeren Schnellläufer-Lagerbehältern bücken und diese auf die Rollenbahn für die Auftragsbehälter heben. Dies ist ergonomisch ungünstig. Außerdem muss zur Trennung von fertigen Auftragsbehältern und leeren Lagerbehältern eine Überwachungseinrichtung vorgesehen werden, die den gemischten Behälterstrom erkennt und entsprechende Trennvorgänge einleitet. Dies erhöht die Anschaffungskosten und den Steuerungsaufwand (zumindest beim Materialflussrechner).

Eine Kommissionierleistung des Kommissionierplatzes gemäß der EP 0 847 939 B2 ist gering, weil immer nur ein einziger Langsamdreher-Lagerbehälter pro (bidirektional betriebenen) Durchlaufkanal bereitgestellt werden kann. Um einen Langsamdreher-Typ auszutauschen, muss der vorhergehende Langsamdreher erst (manuell gegen die Schwerkraft) innerhalb des entsprechenden Durchlaufkanals zurückgeschoben werden und dann vom Regalbediengerät abgeholt werden. Erst dann kann das Regalbediengerät den neuen, gewünschten Langsamdreher aus einem Lagerbereich abholen, zum Kommissionierplatz transportieren und in den freigewordenen Durchlaufkanal einspeisen. Eine Pufferung mehrerer, hinsichtlich eines Typs unterschiedlicher, Langsamdreher innerhalb eines Kanals ist nicht möglich.

Die deutsche Patentanmeldung DE 10 2010 010 305 A1 beschreibt eine Verbesserung gegenüber der EP 0 847 939 B2. Die DE 10 2010 010 305 A1 offenbart ebenfalls einen automatisierten Kommissionierplatz zum manuellen Kommissionieren von Artikel aus Lagerbehältern in zumindest einen Auftragsbehälter. Dort werden schnelldrehende Artikel in Durchlaufkanälen bereitgestellt, die vorzugsweise unidirektional betrieben werden. Mittel- und langsamdrehende Artikel werden ebenfalls über einen, vorzugsweise unidirektional betriebenen, Durchlaufkanal bereitgestellt. Ein oder mehrere Auftragsbehälter werden in vorzugsweise bidirektional betriebenen Bereitstellungskanälen angedient. Die Enden dieser Kanäle bilden eine (homogene) Kommissionierfläche, durch die keine Fördertechnik zum Transportieren der Auftragsbehälter hindurch verläuft. Damit ist gewährleistet, dass die Kommissionierfläche optimal hinsichtlich einer möglichen Anzahl von angedienten Behältern ausgenutzt wird. Es wird kein Platz bzw. Raum verschenkt. Die Kommissionierperson muss die Behälter dennoch aus dem Rücken heben, um die Behälter umzusetzen. Die Kommissionierperson muss sich auch bücken, um häufig benötigte Artikel aus den entsprechenden Lagerbehältern zu entnehmen, da die Schnelldreher-Lagerbehälter alle oberhalb der Auftragsbehälter, zumindest aber auf gleicher Höhe wie die Auftragsbehälter, angeordnet sind.

Bei der DE 10 2010 010 305 A1 ist vorzugsweise ein weiterer Kanal zum Abtransport von vollständig oder teilweise geleerten Lagerbehältern vorgesehen, der parallel zu den anderen Kanälen orientiert ist und dessen eines Ende ebenfalls in der Kommissionierfläche liegt. Da üblicherweise lediglich die Auftragsbehälter-Bereitstellungskanäle bidirektional betrieben werden, müsste ohne einen weiteren Kanal, der dazu eingerichtet ist, Lagerbehälter aus der Kommissionierfläche zu entfernen, jederzeit sichergestellt sein, dass zumindest einer der Auftragsbehälter-Bereitstellungskanäle frei ist, um einen leeren Lagerbehälter aufnehmen und abführen zu können. Um eine maximale Anzahl von Auftragsbehältern gleichzeitig befüllen zu können, ist es aber erforderlich, alle Auftragsbehälter-Bereitstellungskanäle mit Auftragsbehältern zu versorgen.

Nachfolgend werden exemplarisch Behälter als Ladehilfsmittel für zu kommissionierende Artikel beschrieben. Unter einem "Behälter" ist jede Art von Ladungsträger zu verstehen, der geeignet ist, zu kommissionierende Artikel an einen erfindungsgemäßen Kommissionierplatz zu fördern. In diesem Sinne umfasst der Begriff "Behälter" auch zum Beispiel Tablare, Kartons, Paletten und ähnliche Ladungsträger. Die Artikel können aber auch ladungsträgerlos angedient werden.

Unter "Schnelldrehern" (bzw. "Schnellläufern") und "Langsamdrehern" (bzw. "Langsamläufern") werden nachfolgend A-Artikel bzw. B- oder C-Artikel eines Artikelsortiments verstanden, die nach bestimmten Kriterien, zum Beispiel Absatzmenge, Umschlaghäufigkeit oder Zugriffhäufigkeit, klassifiziert sind. A-Artikel haben hohe Absatzmengen, Umschlagraten oder Zugriffhäufigkeiten, C-Artikel haben geringe. Die Grenzen zwischen A-, B- und C-Gruppen werden im Einzelfall festgelegt. Die Sortierung nach den Auftrittshäufigkeiten ergibt eine sogenannte Lorenz-Kurve. Es versteht sich, dass die Langsamdreher auch um die Mitteldreher ("B-Artikel") erweitert werden können. Zur Vereinfachung der Darstellung wird nachfolgend gegebenenfalls nur noch zwischen Schnelldrehern und Langsamdrehern unterschieden werden. Diese Darstellung ist jedoch um beliebige Zwischenkategorien erweiterbar.

Wenn die Lagerbehälter-Durchlaufkanäle nicht bidirektional betrieben werden, müssen die Lagerbehälter von ihren jeweiligen Andienungsplätzen angehoben und durch die Luft zum Abzugskanal bewegt werden.

Generell sind bei den obengenannten bekannten Kommissionierplätzen besondere Sicherheitsvorschriften zu beachten, wenn die Lager- und/oder Auftragsbehälter maschinell angedient und abgeholt werden, insbesondere wenn ein Regalbediengerät zum Einsatz kommt, welches über ein Lastaufnahmemittel verfügt, das wiederum in das Regal eindringt, um die Behälter auszutauschen. Die Sicherheit muss zu jedem Zeitpunkt gewährleistet sein. Dies bedeutet, dass es keine ungeschützten Bereiche geben darf, wo der Kommissionierer und das Regalbediengerät (unabsichtlich) miteinander kollidieren könnten. Aus diesem Grund weisen zum Beispiel die Durchlaufkanäle der EP 0 847 939 B2 aktivierbare Anschlagselemente auf, um einen zurückgeschobenen Behälter an einer Position zu halten, die entfernt zur Kommissionierperson ist, während das Regalbediengerät diesen Behälter austauscht. Das Vorsehen und Steuern dieses Anschlags (Rückhalteelement) ist aufwändig.

Die DE 10 2008 012 877 A1 sowie die EP 2 327 644 A1 betreffen jeweils eine Kommissioniereinrichtung und ein Verfahren zum Kommissionieren von Artikeln aus Quellbehältern in Zielbehälter, wobei ein vertikal umlaufender Förderer zwecks Zuführung und Abführung der Quellbehälter und Zielbehälter eingesetzt wird.

Die DE 10 2006 025 619 A1 zeigt eine Regal-integrierte Packstation, bei der Artikel von Tablaren entnommen und auf Auftragspaletten abgegeben werden, wobei die Tablare über Lifte bereitgestellt werden, die entlang von Längsseiten von Lagerregalen angeordnet sind.

Die DE 10 2009 050 965 A1 zeigt eine Kommissioniergasse, wo Artikel in einer Gasse von seitlich bereitgestellten Paletten entnommen werden, die rückseitig zugeführt und abgeführt werden.

Die DE 10 2006 023 477 A1 zeigt ein Lager- und Kommissioniersystem sowie ein Verfahren zum Kommissionieren, wobei ein vertikal umlaufender Förderer zum Zuführen und Abführen von Artikeln eingesetzt wird, die an Kommissionierplätzen oberhalb eines Lagerbereichs kommissioniert werden.

Die DE 602 01 652 T2 offenbart einen Kommissionierplatz, der über mehrere Fördertechnik-Stichstrecken an einer Hauptfördertechnik angeschlossen ist, wobei im Bereich der Stichstrecken ein vertikaler Kommissionierpuffer vorgesehen ist.

Das Dokument WO 2012/147261 A1 offenbart ein Lager- und Kommissioniersystem zum manuellen Kommissionieren von Artikeln aus Lagerbehältern in Auftragsbehälter, wobei die Auftragsbehälter in einem Regal bereitgestellt werden, welches mit angetriebenen Förderern ausgestattet ist, um die zu befüllenden Auftragsbehälter durch die Regale zu fördern. Diese Regale werden über ein weiteres Regal mit den Auftragsbehältern versorgt. Das weitere Regal wird von einem Regalbediengerät oder einem Einebenen-Shuttle bedient.

Das Dokument DE 10 2011 018 983 A1 offenbart einen Kommissionierplatz zum manuellen Kommissionieren von Artikeln aus Lagerbehältern in Auftragsbehälter, wobei die Behälter in einer vertikalen Ebene rotierend am Kommissionierer in übereinander angeordneten Kanälen vorbeigeführt werden.

Das Dokument EP 1 710 174 A1 offenbart ein zweistufiges Verfahren zum Kommissionieren von Artikeln aus Lagerbehältern in Auftragsbehälter, wobei die Artikel in einer ersten Stufe aus den Lagerbehältern in Sammelbehälter eingesammelt werden und die Sammelbehälter in einem automatisierten Regal zur finalen Entnahme der Artikel in der zweiten Stufe angedient werden.

Es ist daher eine Aufgabe der vorliegenden Erfindung, ein verbessertes Verfahren und einen verbesserten Kommissionierplatz zum Kommissionieren von Artikeln aus Lagerbehältern in Auftragsbehälter vorzusehen, insbesondere wenn ein Austausch der Lagerbehälter automatisiert erfolgt.

Diese Aufgabe wird gelöst durch einen Kommissionierplatz zum manuellen Kommissionieren von Artikeln gemäß Anspruch 1.

Der Kommissionierplatz der Erfindung ist vollständig automatisiert hinsichtlich eines Materialflusses betreibbar. Ein Zurückschieben abgearbeiteter Lagerbehälter innerhalb eines Kanals entgegen der Zuführrichtung ist ausgeschlossen. Somit ist eine Verletzungsgefahr des Kommissionierers ausgeschlossen, weil der Kommissionierer nicht mit der (automatisierten) Versorgungseinrichtung kollidieren kann. Der Kommissionierer muss fertig bearbeitete Lagerbehälter auch nicht anheben und durch die Luft bewegen, um sie zu entsorgen. Der Kommissionierer schiebt die abgearbeiteten Lagerbehälter zu dem zugeordneten Abzugskanal oder veranlasst einen automatisierten Abtransport der abgearbeiteten Lagerbehälter vom Zuführkanal zu dem zugeordneten Abzugskanal. Im letzten Fall sind die Abschiebeplätze mit einem angetriebenen Förderer versehen.

Der Kommissionierplatz der vorliegenden Erfindung ist in der Lage, eine Vielzahl unterschiedlicher Langsamläufer-Lagerbehälter zu puffern. Innerhalb eines Zuführkanals können mehrere Langsamläufer-Lagerbehälter, in einer vorgegebenen Sequenz, hintereinander gepuffert werden, weil die fertig bearbeiteten Lagerbehälter in ihrem Zuführkanal nicht mehr zurückgeschoben, sondern in Richtung des zugeordneten Abzugskanals bewegt werden. Somit finden innerhalb eines Kanals keine Vorwärts- und Rückwärtsbewegungen gleichzeitig mehr statt. Die Lagerbehälter legen innerhalb des Kommissionierbereichs vielmehr einen offenen, schleifenförmigen Weg zurück, der durch die Versorgungseinrichtung geschlossen wird.

Die Versorgungseinrichtung wird entlastet, weil unterschiedliche (Langsamläufer-) Lagerbehälter innerhalb ein und desselben Kanals gepuffert werden können. Die Versorgungseinrichtung muss also nicht warten, bis der in einem der Zuführkanäle befindliche Lagerbehälter abgearbeitet ist, sondern kann zu einem beliebigen Zeitpunkt den innerhalb einer Sequenz nächsten Lagerbehälter nachführen, sobald Zeit dafür ist. Das Gleiche gilt natürlich auch für den Abtransport fertig bearbeiteter Lagerbehälter. Die fertig bearbeiteten Lagerbehälter müssen nicht sofort abgeführt werden, sondern können innerhalb eines Abzugskanals aufgestaut werden, bis die Versorgungseinrichtung Zeit hat, die fertig bearbeiteten Lagerbehälter abzuholen. Somit wird insbesondere die Versorgungseinrichtung entlastet. Dennoch können mehr Lagerbehälter pro Raumeinheit angedient werden. Somit erhöht sich die Kommissioniereffizienz und -leistung.

Der Kommissionierplatz der vorliegenden Erfindung ist besonders ergonomisch.

Ein mit einem Materialfluss verbundener Steuerungsaufwand ist am Kommissionierplatz der vorliegenden Erfindung geringer als im Stand der Technik. Der Materialflussrechner kann Vorwärts- und Rückwärtsbewegungen innerhalb ein und desselben Kanals vernachlässigen. Die Behälter fließen innerhalb eines Kanals unidirektional. Es ist sogar möglich, Auftragsbehälter und Lagerbehälter über den gleichen Abzugskanal zu entsorgen. Gleiches gilt natürlich auch für die Zuführung von Lagerbehältern und Auftragsbehältern.

Die materialflusstechnische Zuordnung eines Kanals kann beliebig oft gewechselt werden. In einem ersten Moment werden die Lagerbehälter angedient und entsorgt. In einem anderen Moment können die Auftragsbehälter über die gleichen, einander zugeordneten Kanäle angedient und entsorgt werden. Ein Planer ist vollkommen frei in der Belegung der Kanäle.

Die Kanäle erstrecken sich in der Querrichtung des Systems. Durch eine derartige Anordnung ist es möglich, konventionelle Elemente, wie zum Beispiel Regalbediengeräte, Durchlaufkanäle und dergleichen, einzusetzen.

Weiterhin ist es von Vorteil, wenn die Versorgungseinrichtung eine Fördertechnik, ein Shuttle oder ein Regalbediengerät ist.

Mit der vorliegenden Erfindung ist es möglich, jeglichen Typ von Transportmittel zwecks Zuführung und Abführung der Behälter einzusetzen.

Bei einer bevorzugten Ausführungsform liegt jeweils einer der Abschiebeplätze einem der Bereitstellungsenden oder der Aufnahmeenden gegenüber.

Die Abschiebeplätze stellen in diesem Fall zusätzliche Elemente neben den Kanälen dar und können zum Andienen der Lager- oder Auftragsbehälter benutzt werden. Sie werden aber im Wesentlichen als Transportstrecke zur Abführung der fertig bearbeiteten Behälter benutzt. So ist es zum Beispiel möglich, Höhendifferenzen zwischen einem Zuführkanal und dem diesem Zuführkanal zugeordneten Abzugskanal zu überbrücken, ohne dass der Kommissionierer den Behälter durch die Luft heben bzw. bewegen muss.

Bei einer anderen vorteilhaften Ausgestaltung definieren die Abschiebeplätze eine Abschiebestrecke.

Ein Materialflussrechner kann die Abschiebeplätze dann als Förderstrecke berücksichtigen. Die Abschiebestrecke kann angetrieben oder nicht angetrieben ausgeführt sein. Die angetriebene Version ist ergonomisch günstiger, weil der Kommissionierer die Behälter nicht schieben muss. Die Behälter werden in diesem Fall automatisiert zum Abzugskanal transportiert.

Außerdem ist es von Vorteil, wenn an den Bereitstellungsenden jeweils eine Stoppeinrichtung vorgesehen ist.

Die Stoppeinrichtung verhindert, dass die bevorrateten Lagerbehälter unkontrolliert nachfließen, sobald einer der Lagerbehälter fertig abgearbeitet und abgeschoben ist.

Insbesondere sind die Abschiebeplätze angetriebene oder nicht angetriebene Förderelemente.

Bei einer weiteren vorteilhaften Ausführungsform sind die Zuführkanäle angetriebene oder nicht angetriebene Durchlaufkanäle.

Das Nachführen von Behältern lässt sich auf diese Weise automatisieren, und zwar sowohl für die Zuführung als auch für die Abführung durchführen.

Weiter ist es von Vorteil, wenn auch die Abzugskanäle angetriebene oder nicht angetriebene Durchlaufkanäle sind.

Hier gelten die gleichen Vorteile wie oben.

Bei einer weiteren besonderen Ausgestaltung weist der Kommissionierplatz ferner eine Auftragsbehälter-Fördertechnik auf, die durch den Kommissionierbereich verläuft und die vorzugsweise aus Stauförderelementen gebildet ist.

Die Materialfluss-Steuerungseinrichtung ist insbesondere eingerichtet, in einigen der einander zugeordneten Kanäle die Auftragsbehälter zum Kommissionierer hin und vom Kommissionierer weg zu transportieren.

Für die Auslegung der Anlage ist es sekundär, ob einer der Kanäle mit Auftragsbehältern oder Lagerbehältern betrieben wird. Welchen Behältertyp ein Kanal bevorratet, liegt im Ermessen des Anlagenentwerfers. Der Anlagenentwerfer ist frei in der Konfiguration der Kanalzuordnung.

Ferner wird ein Kommissioniersystem mit einem erfindungsgemäßen Kommissionierplatz vorgeschlagen.

Das Kommissioniersystem weist insbesondere ein Lagerbehälter-Lager auf, das über die Versorgungseinrichtung an die Kanäle gekoppelt ist, soweit ein Materialfluss betroffen ist.

Die obengenannte Aufgabe wird ferner durch ein Verfahren gemäß Anspruch 15 gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf einen Kommissionierplatz gemäß der Erfindung;
- Fig. 2A: eine erste Möglichkeit einer Kanalanordnung;
- Fig. 2B: eine zweite Möglichkeit einer Kanalanordnung;
- Fig. 3A: eine Draufsicht auf einen alternativen Kommissionierplatz;
- Fig. 3B: eine Schnittansicht entlang einer Linie 3B-3B der Fig. 3A;
- Fig. 3C: eine Schnittansicht entlang der Linie 3C-3C der Fig. 3A; und
- Fig. 4: ein Flussdiagramm eines Kommissionierverfahrens.

Der in der Beschreibung der nachfolgenden Figuren erwähnte Kommissionierplatz der vorliegenden Erfindung eignet sich unter anderem auch zur Batch-Kommissionierung. Unter einer "Batch" versteht man üblicherweise eine Zusammenfassung von mehreren Aufträgen zu einer geordneten Menge oder Liste von Aufträgen. Ein Auftrag besteht aus einer oder mehreren Auftragspositionen (Auftragszeilen, auch "Orderlines" genannt) mit der jeweiligen Menge eines Artikels. Beim Batch-Kommissionieren werden mehrere Aufträge parallel bearbeitet, indem zum Beispiel Artikel aus einem sortenreinenLagerbehälter entnommen werden und auf verschiedene Auftragsbehälter verteilt werden, die diesen Artikeltyp gemäß ihrem jeweiligen Kommissionierauftrag benötigen. Der Entnahmevorgang erfolgt dann artikelorientiert. Die Batch-Kommissionierung ist für die vorliegende Erfindung aber sekundär. Am erfindungsgemäßen Kommissionierplatz muss nicht batchweise kommissioniert werden.

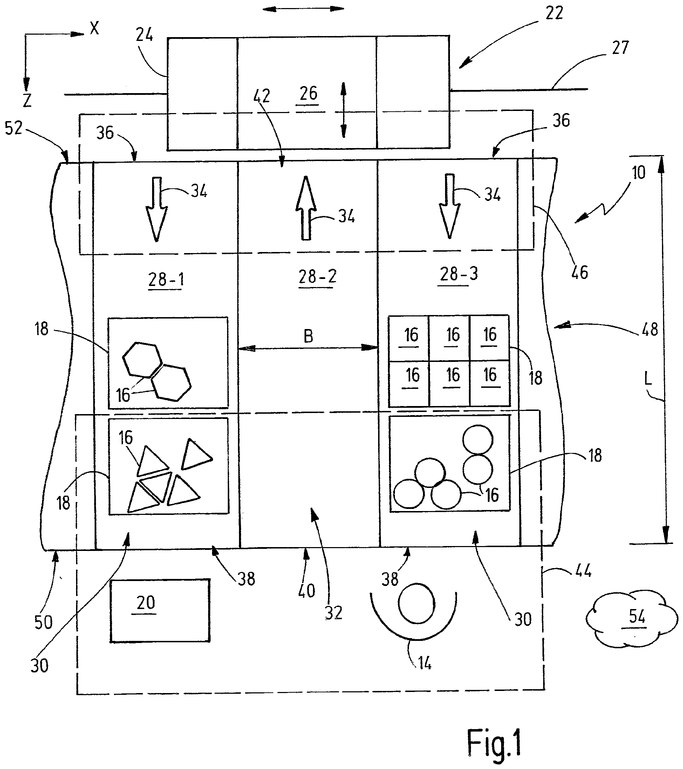

Fig. 1 zeigt eine Draufsicht auf ein partiell gezeigtes Kommissioniersystem 10, insbesondere auf einen Kommissionierplatz 12, wo eine Kommissionierperson 14 manuell Artikel 16 gemäß einem Kommissionierauftrag aus einem oder mehreren Lagerbehältern 18 entnimmt und in einen diesem Kommissionierauftrag zugeordneten Auftragsbehälter 20 abgibt. Die Kommissionierperson 14 kann ein hier nicht näher gezeigtes Kommissionierperson-Leitsystem aufweisen, welches der Kommissionierperson 14 angibt, welche Artikel und wie viele Artikel aus welchem der Lagerbehälter 18 zu entnehmen sind und in welchen der Auftragsbehälter 20 die entnommenen Artikel 16 abzugeben sind. Die Kommissionierung kann zum Beispiel mittels Pick-by-Light, Pick-by-Voice, Pick-by-Vision oder einem ähnlichen Leitkonzept erfolgen. Die Artikel 16 können A-, B- oder C-Artikel sein. Die Behälter 18 sind vorzugsweise sortenrein oder fachunterteilt sortenrein bestückt.

Der Kommissionierplatz 12 ist ein Element des Kommissioniersystems 10. Das Kommissioniersystem 10 weist ferner eine Versorgungseinrichtung 22 auf, um die Lagerbehälter 18 zwischen dem Kommissionierplatz 12 und einem hier nicht näher gezeigten Lagerbereich (zum Beispiel Regallager) auszutauschen. Die Versorgungseinrichtung 22 ist in Fig. 1 exemplarisch als Regalbediengerät 24 mit einem Lastaufnahmemittel 26 implementiert. Das Regalbediengerät 24 ist (horizontal) entlang einer Schiene 27 verfahrbar, die sich in einer Längsrichtung X des Systems 10 erstreckt. Das Lastaufnahmemittel 26 ist auf einem hier nicht näher gezeigten Hubtisch angeordnet, der zwischen ebenfalls nicht näher gezeigten Masten des Regalbediengeräts 24 vertikal entlang einer Höhenrichtung Y verfahrbar ist, die senkrecht auf der Zeichnungsebene steht. Das Lastaufnahmemittel 26 ist eingerichtet, die Lagerbehälter 18 in einer Querrichtung Z des Systems 10 zu bewegen und mit Kanälen 28 des Kommissionierplatzes 12 auszutauschen. Das Lastaufnahmemittel 26 kann zum Beispiel durch teleskopierbare Gabeln implementiert sein, die in der Querrichtung Z ein- und ausfahrbar sind, um die Lagerbehälter 18 in den Kanälen 28 zu unterfahren und auszuheben. Das Lastaufnahmemittel 26 kann auch in Form von in der Querrichtung Z ein- und ausfahrbaren Greifarmen implementiert sein, die in der Längsrichtung X beweglich sind, um die Lagerbehälter 18 seitlich zu umgreifen. Der Fachmann kennt eine Vielzahl anderer Lastaufnahmemittel, die ebenfalls zum Austausch der Lagerbehälter 18 im Kanal 28 geeignet sind.

Die Versorgungseinrichtung 22 kann ferner in Form einer konventionellen Fördertechnik (Stetigförderer wie zum Beispiel angetriebene Rollenbahn inklusive Querumsetzer; Kettenförderer; Shuttle, Einebenenbediengerät; Mehrebenenbediengerät, Hängeförderer oder dergleichen) implementiert sein.

Die Kanäle 28 des Kommissionierplatzes 12 erstrecken sich hier exemplarisch im Wesentlichen in der Querrichtung Z. In der Fig. 1 sind drei Kanäle 28-1 bis 28-3 in größerem Detail gezeigt. Die Kanäle 28-1 bis 28-3 sind vorzugsweise parallel zueinander angeordnet und weisen eine, vorzugsweise gleiche, Länge L und Breite B auf. Die Länge L und die Breite B können von Kanal 28 zu Kanal 28 variieren. Die Länge L und die Breite B hängen von einer Dimension der in diesem Kanal zu handhabenden (Lager-) Behälter 18 ab.

Von den drei in der Fig. 1 gezeigten Kanälen 28-1 bis 28-3 stellen die Kanäle 28-1 und 28-3 Zuführkanäle 30 dar. Der Kanal 28-2 stellt einen Abzugskanal dar. Über Zuführkanäle 30 werden die Behälter 18 angedient. Über die Abzugskanäle 32 werden die Behälter 18 entsorgt. Generell gilt, dass in den Zuführkanälen 30 die Lagerbehälter 18 von der Versorgungseinrichtung 22 ausschließlich in Richtung des Kommissionierers 14 transportiert werden (vgl. helle Pfeile 34). In den Abzugskanälen 32 werden die Lagerbehälter 18, nachdem Artikel 16 aus ihnen entnommen wurden, ausschließlich hin zur Versorgungseinrichtung 22 transportiert (siehe heller Pfeil 34). Die Kanäle 28 werden vorzugsweise unidirektional betrieben. In unidirektional betriebenen Kanälen 28 bewegen sich die Behälter 18 nur in einer einzigen Richtung innerhalb des Kanals 28. In bidirektional betriebenen Kanälen (nicht in Fig. 1 gezeigt) können sich die Behälter 18 vor und zurück innerhalb des jeweiligen Kanals bewegen.

Jeder der Zuführkanäle 30 weist ein Übergabeende 36 auf, das der Versorgungseinrichtung 22 direkt gegenüberliegt. Jeder der Zuführkanäle 30 weist ein Bereitstellungsende 38 auf, das dem Kommissionierer 14 zugewandt ist. Jeder der Abzugskanäle 32 weist ein Aufnahmeende 40 auf, welches wiederum dem Kommissionierer 14 zugewandt ist. Jeder der Abzugskanäle 32 weist ein Abgabeende 42 auf, das der Versorgungsrichtung 22 direkt gegenüberliegt. Die Bereitstellungsenden 38 der Zuführkanäle 30 und die Aufnahmeenden 40 der Abzugskanäle 32 liegen innerhalb eines Kommissionierbereichs 44, der in Fig. 1 mit einer Strichlinie angedeutet ist. Die Übergabeenden 36 der Zuführkanäle 30 und die Abgabeenden 42 der Abzugskanäle 32 liegen in einem Transferbereich 46, der in der Fig. 1 wiederum mit einer Strichlinie angedeutet ist.

Der Kommissionierbereich 44 stellt einen Raum dar, in welchem sich der Kommissionierer 14 bewegt, um die Artikel 16 aus angedienten Lagerbehältern 18 zu entnehmen und in bereitgestellte Auftragsbehälter 20 abzugeben. Der Kommissionierbereich 44 kann also die Bereitstellungsenden 38 der Zuführkanäle 30 umfassen. Der Kommissionierbereich 44 kann auch die Aufnahmeenden 40 der Abzugskanäle 32 umfassen. Es versteht sich, dass sich die in der Fig. 1 in lediglich einer Ebene dargestellte Anordnung der Kanäle 28 auch in der Höhenrichtung Y fortsetzen kann, um die Lagerbehälter 18 in mehreren Ebenen anzudienen, die über- und/oder untereinander angeordnet sind. Die Kanäle 28 sind dazu vorzugsweise in einem hier nicht näher gezeigten Regal 48 angeordnet. Das Regal 48 kann vertikale Regalsteher und horizontale Verstärkungstreben aufweisen, um die Kanäle 28 aufzunehmen. Das Regal 48 weist eine Vorderseite 50 und eine Rückseite 52 auf.

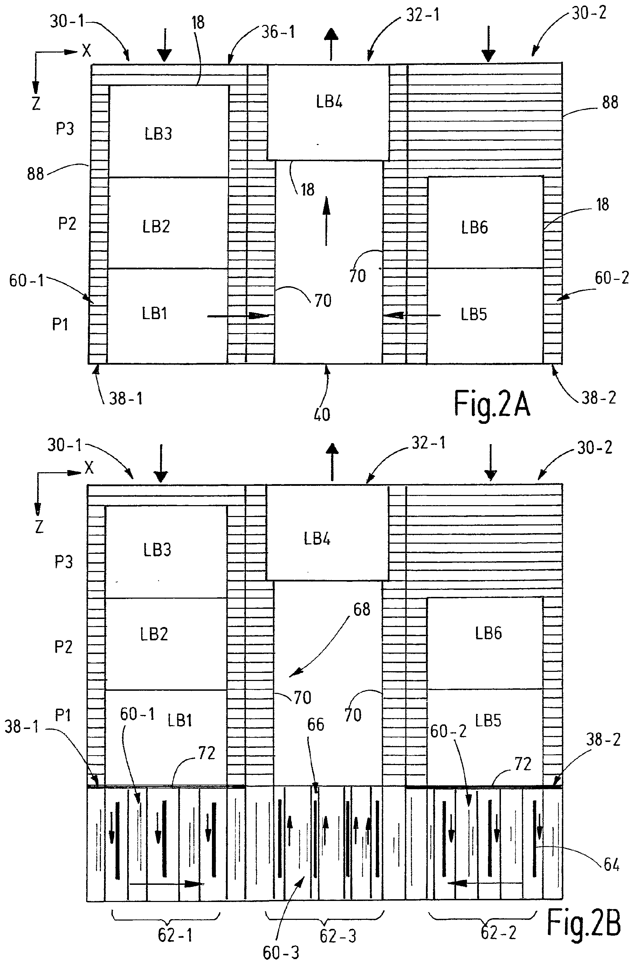

Im Kommissionierbereich 44 koppeln die Bereitstellungsenden 38 der Zuführkanäle 30 an die Aufnahmeenden 40 der Abzugskanäle 32. Jedes Aufnahmeende 40 kann, hier in der Längsrichtung X, direkt benachbart zu zumindest einem der Bereitstellungsenden 38 angeordnet sein. Die Anordnung der Bereitstellungsenden 38 und der Aufnahmeenden 40 ist dergestalt, dass der Kommissionierer 14 abgearbeitete Lagerbehälter 18, hier in der Längsrichtung X, von den Bereitstellungsenden 38, wo die Lagerbehälter 18 zwecks Artikelentnahme angedient werden, zu zumindest einem Aufnahmeende 40 zum Beispiel schieben kann. Ein Umsetzen der abgearbeiteten Lagerbehälter 18 durch Anheben und Bewegen durch die Luft ist nicht erforderlich und nicht gewünscht. Jedem der Zuführkanäle 30 ist mindestens einer der Abzugskanäle 32 zugeordnet, um die abgearbeiteten Lagerbehälter 18 aus dem Kommissionierbereich 44 heraus zu transportieren. Die Zuordnung ist dergestalt, dass die einander zugeordneten Kanäle 28 räumlich verbunden sind, so dass die abgearbeiteten Lagerbehälter 18 von den Zuführkanälen 30 mittels einer Translationsbewegung (angetrieben oder nicht angetrieben), ohne Heben durch den Kommissionierer 14, zum jeweils zugeordneten Abzugskanal 32 bewegt werden können. Unter Bezugnahme auf Fig. 2 werden unten verschiedene Möglichkeiten gezeigt werden, wie die einander zugeordneten Kanäle 28 räumlich verbunden sein können, um die einander zugeordneten Bereitstellungsenden 38 und Aufnahmeenden 40 (direkt) miteinander zu verbinden.

Der Transferbereich 46 definiert einen Raum, wo ein Austausch der Lagerbehälter 18 zwischen der Versorgungseinrichtung 22 und den Kanälen 28 stattfindet. Der Transferbereich 46 umfasst also den Raum, wo die Übergabeenden 36 der Zuführkanäle 30 und die Abgabeenden 42 der Abzugskanäle 32 angeordnet sind. In der Draufsicht der Fig. 1 sind die Übergabeenden 36 der Zuführkanäle 30 und das Abgabeende 42 des Abzugskanals 32 direkt benachbart angeordnet. Es versteht sich, dass die Übergabeenden 36 und die Abgabeenden 42 aber nicht direkt benachbart angeordnet sein können, weil es zu keinem materialflusstechnischen direkten Transfer zwischen den Übergabeenden 36 und den Abgabeenden 42 kommt oder kommen muss. Die Übergabeenden 36 und die Abgabeenden 42 von einander zugeordneten Kanälen 28 können zum Beispiel in unterschiedlichen Höhen liegen. Dies ist insbesondere dann der Fall, wenn die Kanäle 28 in Form von (geneigten) Durchlaufkanälen implementiert sind. Durchlaufkanäle sind in der Regel nicht motorisch angetrieben. Ein Transport der Lagerbehälter 18 innerhalb der Durchlaufkanäle erfolgt in der Regel allein aufgrund von Schwerkraft. Man spricht in diesem Zusammenhang auch von Gefällebahnen oder geneigten Schwerkraftbahnen. Diese Bahnen können mit lose drehenden Rollen versehen sein, um eine sichere Zuführung der Lagerbehälter 18 zu den jeweiligen Bereitstellungsenden 38, die als Andienungsplätze dienen können, und zu den Abgabeenden 42 zu gewährleisten.

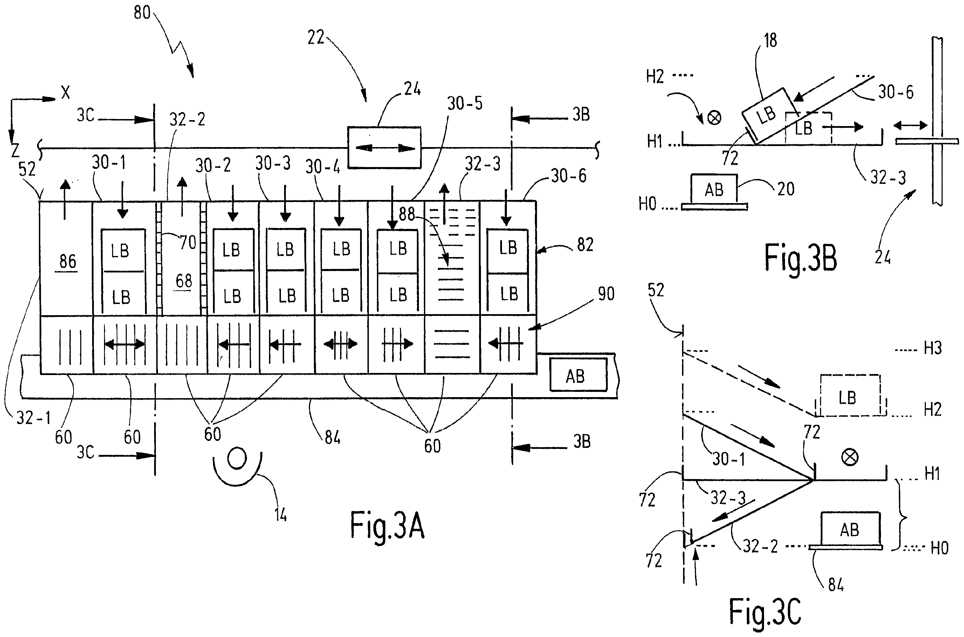

Diese Art der Anordnung wird unter Bezugnahme auf Fig. 3 noch näher erläutert werden.

Wenn die Kanäle 28 im Regal 48 angeordnet sind, so liegen die Bereitstellungsenden 38 und die Aufnahmeenden 40 vorzugsweise im Bereich der Vorderseite 50 des Regals 48. Die Vorderseite 50 entspricht vorzugsweise einer ersten Längsseite des Regals 48, das dann in der X-Richtung länger ist als es in der Querrichtung Z tief ist. Die Übergabeenden 36 und die Abgabeenden 42 sind entlang der Rückseite 52 des Regals 48 angeordnet. Die Rückseite 52 entspricht einer zweiten Längsseite des Regals 48, die vorzugsweise parallel zur Vorderseite 50 angeordnet ist und dieser gegenüberliegt. Die Übergabeenden 36 und die Abgabeenden 42 liegen alle vorzugsweise innerhalb der Rückseite 52, die sich in der Fig. 1 parallel zur XY-Ebene erstreckt. Es versteht sich, dass die Übergabeenden 36 und die Abgabeenden 42 unterschiedlicher Andienungsebenen in der Querrichtung Z leicht gegeneinander versetzt sein können, um einen Zugriff auf die Artikel 16 zu erleichtern, die in unterschiedlichen Höhen Y angedient werden. Es ist bevorzugt, wenn höhere Ebenen in der Querrichtung Z weiter nach hinten versetzt sind, um dem Kommissionierer 14 einen Einblick in die entsprechenden Lagerbehälter 18 zu erleichtern.

Ferner ist in Fig. 1 eine Steuereinrichtung 54 gezeigt, die insbesondere einen Materialfluss im System 10 eine Versorgung des Kommissionierplatzes 12 mit Behältern 18 und 20 regelt. Der Materialfluss umfasst die Zuführung der Lagerbehälter 18, aus denen die Artikel 16 entnommen werden, eine Entsorgung der Lagerbehälter 18, aus denen die Artikel 16 bereits entnommen wurden, sowie optional die Zu- und Abführung der Auftragsbehälter 20.

Fig. 2A zeigt eine Draufsicht auf drei Kanäle 28 eines ansonsten nicht näher gezeigten Kommissionierplatzes 12. Die drei Kanäle 28 bilden eine erste Variante eines (Kanal-) Moduls. Unter Bezugnahme auf Fig. 2B wird eine zweite Variante eines Moduls beschrieben werden, die auf dem ersten Modul der Fig. 2A aufbaut und die um einige Elemente erweitert ist.

Ähnlich wie in Fig. 1 umfasst das Modul der Fig. 2A zwei Zuführkanäle 30-1 und 30-2, zwischen denen ein Abzugskanal 32-1 angeordnet ist.

Die Zuführbahnen 30-1 und 30-2 sind jeweils dem Abzugskanal 32-1 zugeordnet. Der erste Zuführkanal 30-1 weist an seinem Bereitstellungsende 38 einen Abschiebeplatz 60-1 auf, der gleichzeitig als Andienplatz für einen Lagerbehälter LB1 dient. Ein Andienplatz ist ein Bereich, wo ein oder mehrere Lagerbehälter 18 platziert werden, um eine (manuelle) Entnahme von Artikeln 16 zu ermöglichen. In der Fig. 2A sind die Kanäle 28 so lang, dass sie zumindest drei Lagerbehälter 18 hintereinander aufnehmen und puffern können. Der Zuführkanal 30-1 puffert drei Lagerbehälter 18 (LB1 - LB3). Der Lagerbehälter LB1 steht auf dem Abschiebeplatz 60-1, der auch als Andienplatz dient. Der Lagerbehälter LB2 steht auf einer zweiten Position P2 und dient als Vorrat für den Fall, dass der Lagerbehälter LB1 fertig kommissioniert und in Richtung des Abzugskanals 32-1 abgeschoben wurde. Der Lagerbehälter LB3 steht innerhalb des Kanals 30-1 auf einer dritten Position P3, d.h. ganz "hinten". Der Lagerbehälter LB3 ist am Übergabeende 36-1 angeordnet und dient als zweiter Puffer-Lagerbehälter 18 nach dem ersten Puffer-Lagerbehälter LB2. Der zweite Zuführkanal 30-2 bevorratet die beiden Lagerbehälter LB5 und LB6. Der Lagerbehälter LB5 steht auf dem Abschiebeplatz 60-2, der gleichzeitig als Andienplatz dient. Der Lagerbehälter LB6 steht auf der zweiten Position P2 des Kanals 30-2 und dient wiederum als Vorrat. Im Abzugskanal 32-1 befindet sich der Lagerbehälter LB4 am Abgabeende 42 dieses Kanals 28 und ist zur Abholung durch die (hier nicht gezeigte) Versorgungseinrichtung 22 (vgl. Fig. 1) bereit.

In der Fig. 2A sind die Zuführkanäle 30-1 und 30-2 exemplarisch in Form von Rollenbahnen 88 realisiert. Die Rollenbahnen 88 können aus lose drehenden Rollen gebildet sein, um die oben erwähnten Schwerkraftbahnen zu bilden. Der Abzugskanal 32-1 ist zum Beispiel mit seitlich angeordneten Röllchenleisten 70 gebildet, um es dem Lastaufnahmemittel 26 der Versorgungseinrichtung 22 zu ermöglichen, in der Querrichtung Z in den Abzugskanal 32-1 einzufahren und den Lagerbehälter LB4 (vertikal und horizontal) mittig auszuheben.

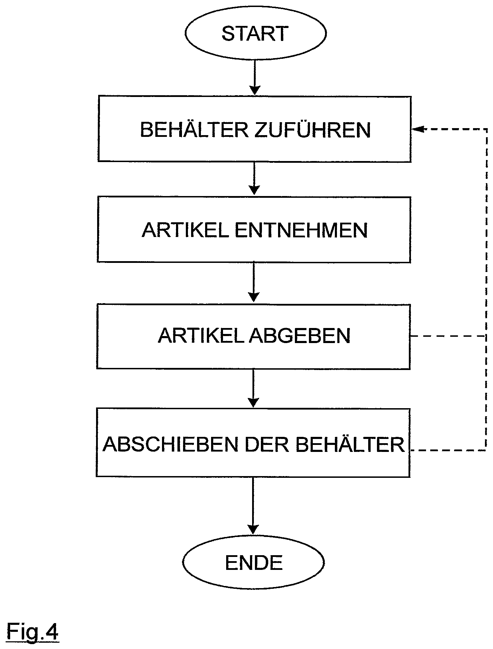

In Fig. 2A ist ein Zustand des Moduls gezeigt, nachdem die Artikel 16 aus dem Lagerbehälter LB4 entnommen wurden und der Lagerbehälter LB4 vom Andienplatz 60-2 des zweiten Zuführkanals 32-2 in der Längsrichtung X nach links in den Abzugskanal 32-1 abgeschoben wurde. Vorzugsweise erfolgt das Abschieben manuell, indem der (hier nicht dargestellte) Kommissionierer 14 den Lagerbehälter 18 vom Zuführkanal 30 in den ihm zugeordneten Abzugskanal 32 schiebt. Es versteht sich, dass der Lagerbehälter LB1, nachdem aus ihm die benötigten Artikel 16 entnommen wurden, ebenfalls längs in den Abzugskanal 32-1 bewegt werden kann. Die restlichen, bevorrateten Lagerbehälter LB2 und LB3 werden dann (vorzugsweise automatisch, zum Beispiel durch Schwerkraft) nachgeführt, so dass der Lagerbehälter LB2 dann auf dem Abschiebeplatz 60-1 steht. Der Lagerbehälter LB3 steht dann auf der zweiten Position P2. Auf der dritten Position P3 ist dann Platz für einen neuen Lagerbehälter LB18, der über die Versorgungseinrichtung 22 anlieferbar ist (siehe auch Fig. 4).

Je länger die Kanäle 28 sind, desto mehr Lagerbehälter 18 können gepuffert werden. Dies gilt sowohl für die Zuführkanäle 30 als auch für die Abzugskanäle 32. Die Pufferung kann in einer vorgegebenen Sequenz erfolgen. Innerhalb eines Kanals 30 können verschiedene Artikel 16 sequenziert gepuffert werden.

Die Kanäle 28 haben vorzugsweise eine Länge (Kapazität) von mindestens zwei Lagerbehältern 18, so dass der "vordere" Lagerbehälter 18 zur Entnahme dient und dahinter zumindest eine weitere Position existiert, die durch die Versorgungseinrichtung 22 mit einem weiteren Lagerbehälter 18 gefüllt werden kann. In diesem Fall bestehen keine sicherheitstechnischen Bedenken, weil der nachgeführte Lagerbehälter 18 (zum Beispiel LB2 oder LB3) außerhalb des Griffbereichs des Kommissioniers 14 liegt, so dass es zu keiner Kollision zwischen dem Kommissionier 14 und der Versorgungseinrichtung 22 kommen kann. Es besteht keine Verletzungsgefahr. Natürlich kann die Aufnahmekapazität der Zuführkanäle auch so gewählt werden, dass nur ein einziger Lagerbehälter aufgenommen werden kann. Eine minimale Länge der Zuführkanäle entspricht also der Länge eines einzigen Lagerbehälters 18, vorzugsweise des längsten Lagerbehälters 18, wenn keine einheitlich dimensionierter Behälter eingesetzt werden.

Außerdem versteht es sich, dass die Behälter sowohl Schnellläufer-Lagerbehälter 18 als auch Langsamläufer-Lagerbehälter 18 sein können, auch gemischt. Da die Langsamläufer-Lagerbehälter 18 nicht im gleichen Kanal entgegen der Zuführrichtung zurückgeschoben werden, um von der Versorgungseinrichtung 22 abgeholt zu werden, ist es möglich, Sequenzen unterschiedlicher Langsamläufer-Artikeltypen in den Zuführkanälen 30 zu puffern. Durch die Pufferkapazität der Kanäle 28 wird die Versorgungseinrichtung 22 entlastet. Die Versorgungseinrichtung 22 muss nicht sofort einen fertigen Lagerbehälter 18 abholen, um ihn in das zugeordnete Lager zurückzulagern. Die Versorgungseinrichtung 22 muss nicht sofort einen neuen Lagerbehälter 18 nachführen, wenn ein Lagerbehälter 18 abgearbeitet wurde, weil bereits ein Vorrat neuer Lagerbehälter 18 vorhanden ist.

Fig. 2B zeigt eine zweite Variante eines Moduls aus Kanälen 28, das ähnlich zum Modul der Fig. 2A aufgebaut ist. Das Modul der Fig. 2B unterscheidet sich vom Modul der Fig. 2A lediglich durch den Ort und die Ausgestaltung der Abschiebeplätze 60.

In der Fig. 2B sind drei Abschiebeplätze 60-1 bis 60-3 gezeigt, wobei der Abschiebeplatz 60-1 dem Zuführkanal 30-1 zugeordnet ist, der Abschiebeplatz 60-2 dem Zuführkanal 30-2 zugeordnet ist und der Abschiebeplatz 60-3 dem Abzugskanal 32-1 zugeordnet ist. Die Abschiebeplätze 60-1 bis 60-3 sind zusätzlich "vor" den Kanälen 28 angeordnet. Der Abschiebeplatz 60-1 liegt dem Bereitstellungsende 38-1 des ersten Zuführkanals 30-1 gegenüber. Der Abschiebeplatz 60-2 liegt dem Bereitstellungsende 38-2 des zweiten Zuführkanals 30-2 gegenüber. Der dritte Abschiebeplatz 60-3 liegt dem Aufnahmeende 40 des Abzugskanals 32-1 direkt gegenüber.

Zwischen dem Zuführkanal 30-1 und dem ersten Abschiebeplatz 60-1 kann im Bereich des Bereitstellungsendes 38-1 eine vertikal heb- und senkbare Stoppeinrichtung 72 (zum Beispiel eine Leiste) vorgesehen sein, die verhindert, dass die Lagerbehälter LB1 bis LB3 ohne weiteres auf den Abschiebeplatz 60-1 gelangen können. Der Zuführkanal 32-2 kann an seinem Bereitstellungsende 38-2 ebenfalls eine Stoppeinrichtung 72 aufweisen, um einen Zufluss von Lagerbehältern 18 auf den Abschiebeplatz 60-2 zu regeln.

Die Abschiebeplätze 60-1 bis 60-3 sind exemplarisch in Form von Rollenbahnen implementiert. Zwischen einzelnen Rollen der Abschiebeplätze 60 können ein oder mehrere Riemen 64 vorgesehen sein, die in diesen Zwischenräumen 66 zwischen den Rollen eines jeweiligen Abschiebeplatzes 60 heb- und senkbar angeordnet sein können. Die Riemen 64 können die Lagerbehälter 18 in der Fig. 2B in der Querrichtung Z fördern.

Die Rollen der Abschiebeplätze 60 können lose drehen oder angetrieben sein. In der Fig. 2B sind die Rollen exemplarisch lose drehend gelagert. Die Riemen 64 sind endlos umlaufend angetrieben. In der Fig. 2B bilden jeweils drei der Riemen 64 eine Riemenhebergruppe 62. Die Riemenhebergruppen 62-1 und 62-2, die gegenüberliegend zu den Zuführkanälen 30-1 und 30-2 angeordnet sind, werden derart betrieben, dass ein Abziehen der Lagerbehälter 18 aus den Zuführkanälen 30-1 und 30-2, bei abgesenkter Stoppeinrichtung 72, unterstützt wird. Auf diese Weise ist es möglich, den jeweils vorderen Lagerbehälter 18 (zum Beispiel LB1 oder LB5) beschleunigt aus dem jeweiligen Zuführkanal 30-1 oder 30-2 abzuziehen, während die restlichen Lagerbehälter 18 (LB2 und LB3 bzw. LB6) langsamer, zum Beispiel aufgrund des Einsatzes einer Schwerkraftbahn, nachgeführt werden. Sobald der vordere Lagerbehälter 18 (LB1 oder LB5) den jeweiligen Zuführkanal 30-1 bzw. 30-2 in der Querrichtung Z verlassen hat, wird die Stoppeinrichtung 72 vertikal angehoben, um einen Anschlag für die nachrückenden Lagerbehälter 18 (LB2 oder LB6) zu bilden.

Die zu kommissionierenden Artikel 16 können entweder bereits entnommen werden, wenn sich der entsprechende Lagerbehälter 18 noch auf der ersten Position P1 des jeweiligen Zuführkanals 30-1 bzw. 30-2 befindet, und/oder wenn der jeweilige Lagerbehälter 18 auf dem zugeordneten Abschiebeplatz 60-1 bzw. 60-2 steht.

Wenn die Entnahme der Artikel 16 bereits innerhalb des jeweiligen Zuführkanals 30 erfolgt, ist es bevorzugt, wenn die Rollen der jeweiligen Abziehplätze 60 (in der X-Richtung) angetrieben sind. In diesem Fall kann ein Abzug eines Lagerbehälters 18, aus dem die Artikel 16 bereits entnommen wurden, vollständig automatisiert erfolgen. Der abgezogene Lagerbehälter 18 kann zum Beispiel vom ersten Abschiebeplatz 60-1 nach rechts auf den dritten Abschiebeplatz 60-3 gefördert werden. Sobald sich der fertig kommissionierte Lagerbehälter 18 auf dem dritten Abschiebeplatz 60-3 befindet, kann die zugehörige Riemenhebergruppe 62-3 angehoben und angetrieben werden, um den Behälter automatisiert an das Aufnahmeende 40 des Abzugskanals 32-1 zu übergeben. Wenn auch die manuelle Entnahme der Artikel 16 aus den Lagerbehältern 18, zum Beispiel mittels eines entsprechend angeordneten Lichtgitters, überwacht wird, kann der Behälteraustausch vollständig automatisiert betrieben werden. Eine derartige Automatisierung ist in der deutschen Patentanmeldung DE 10 2004 002 831 A1 beschrieben, auf die Bezug genommen wird.

Es versteht sich, dass über die Kanäle 28 nicht nur Lagerbehälter 18, sondern auch Auftragsbehälter 20 bewegt werden können, wobei die Auftragsbehälter 20 in der Regel länger an den Andienplätzen verweilen, nämlich so lange, bis alle Artikel 18 eines Kommissionierauftrags eingesammelt sind, bevor die Auftragsbehälter 20 über den entsprechend zugeordneten Abzugskanal 32 vom Kommissionierplatz 12 weg transportiert werden. In diesem Fall umfasst der Kommissionierplatz 12, insbesondere der Kommissionierbereich 44, mehrere der oben oder nachfolgend exemplarisch beschriebenen Module.

Fig. 3A zeigt eine Draufsicht auf eine dritte Variante eines Moduls, das aus einer Vielzahl von Zuführkanälen 30 und Abzugskanälen 32 besteht. Die Anzahl der Zuführkanäle 30 und Abzugskanäle 32 pro Modul kann generell beliebig variiert werden. Außerdem ist in der Draufsicht der Fig. 3A eine optionale Auftragsbehälter-Fördertechnik 84 gezeigt, die sich im Wesentlichen, zumindest im Kommissionierbereich 44, in der Längsrichtung X erstreckt. Wie den Schnittansichten der Fig. 3B und 3C entlang den Linien 3B-3B bzw. 3C-3C in Fig. 3A zu entnehmen ist, ist die Auftragsbehälter-Fördertechnik 84 auf einem Höhenniveau H0 unterhalb der Andienplätze 60 angeordnet. Die Andienplätze 60 sind im Wesentlichen auf dem Höhenniveau H1 angeordnet und können in ihrer Gesamtheit eine oder mehrere Abschiebestrecken 90 definieren. In der Fig. 3A ist eine Abschiebestrecke 90 gezeigt, die sich parallel zu und überhalb der Auftragsbehälter-Fördertechnik 84 erstreckt. Die (zusätzlichen) Abschiebeplätze 60 sind gegenüberliegend zu den Bereitstellungsenden 38 und den Aufnahmeenden 40 der Zuführkanäle 30 und Abzugskanäle 32 angeordnet (vgl. Fig. 2B).

In der Fig. 3A sind von links nach rechts folgende Kanäle 28 gezeigt: Abzugskanal 32-1, Zuführkanal 30-1, Abzugskanal 32-2, Zuführkanal 30-2, Zuführkanal 30-3, Zuführkanal 30-4, Zuführkanal 30-5, Abzugskanal 32-3 und Zuführkanal 30-6. Die Transportrichtung der Lagerbehälter 18 in den jeweiligen Kanälen 16 ist mit dunklen Pfeilen angedeutet. Jedem der Zuführkanäle 30-1 bis 30-6 ist mindestens einer der Abzugskanäle 32-1 bis 32-3 zugeordnet, wobei jedem der Zuführkanäle 30 immer mindestens einer der Abzugskanäle 32 zugeordnet ist. Folgende Zuordnungen (Sub-Module) sind exemplarisch möglich:
30-1 mit 32-1 und/oder 32-2
32-2 mit 30-2, 30-3 und 30-4
32-3 mit 30-4, 30-5 und 30-6

Generell können einem der Zuführkanäle 30 auch mehrere der Abzugskanäle 32 zugeordnet werden, wie es exemplarisch für den Zuführkanal 30-4 der Fig. 3A der Fall ist. Jedem der Abzugskanäle 32 können generell ein oder mehrere Zuführkanäle 30 zugeordnet sein. Dem Abzugskanal 32-2 sind beispielsweise vier Zuführkanäle 30 zugeordnet (30-1, 30-2, 30-3 und 30-4). Dem Abzugskanal 32-3 sind drei Zuführkanäle 30 (30-4, 30-5 und 30-6) zugeordnet.

Die Zuführ- und Abzugskanäle 30 und 32 können strukturell unterschiedlich ausgebildet sein. Die Kanäle 28 können als Rollenbahnen 88, als Gurtförderer 86, Röllchenleistenförderer 68 oder Ähnliches ausgebildet sein. Die Kanäle 28 können abfallend geneigt oder waagrecht angeordnet sein.

Fig. 3B zeigt eine geschnittene Seitenansicht entlang der Linie 3B-3B durch das Kommissioniersystem 80 der Fig. 3A. Der Schnitt verläuft durch den Zuführkanal 30-6, der als geneigte Schwerkraftbahn ausgebildet ist. Der dahinter liegende Abzugskanal 32-3 ist als waagrechter Rollenförderer 88 mit angetriebenen Rollen ausgebildet, um die Lagerbehälter 18, aus denen die Artikel 16 bereits zwecks Kommissionierung entnommen wurden, wieder zurück in Richtung des Regalbediengeräts 24 zu transportieren. An ein stromabwärtiges Ende des Zuführkanals 30-6 schließt sich die Abschiebestrecke 90 in Form eines Abschiebeplatzes 60 an. Der in Fig. 3B mit einer durchgezogenen Linie gezeigte Lagerbehälter 18 wird mit einer Stoppeinrichtung 72 im Zuführkanal 30-6, vorzugsweise zwecks einer Artikelentnahme, gehalten. Sobald der Artikel 16 entnommen ist, wird der Lagerbehälter 18 - durch Versenken der Stoppeinrichtung 72 - auf den zugehörigen Abschiebeplatz 60 transferiert, von wo er, in der Fig. 3A nach links, zum Abschiebeplatz 60 bewegbar ist, der dem Abzugskanal 32-3 unmittelbar gegenüberliegt. In der Fig. 3A sind die Abschiebeplätze 60 zum Beispiel als Rollenbahnen 88 (angetrieben oder nicht angetrieben) implementiert. Es versteht sich, dass der Kommissionierer 14 keinen der Lagerbehälter 18 anheben und durch die Luft umsetzen muss, um ihn an einen Abzugskanal 32 zu liefern. Der Transport der Behälter 18 und 20 erfolgt im Wesentlichen automatisiert, insbesondere wenn die Abschiebestrecke 90 aus angetriebenen Rollenfeldern (Segment) besteht. Anderenfalls muss der Kommissionierer die abgearbeiteten Lagerbehälter 18 per Hand auf der Abschiebestrecke 90 zu einem der Abzugskanäle 32 schieben. Die Auftragsbehälter 20 werden unterhalb der Abschiebestrecke 90 auf der Auftragsbehälter-Fördertechnik 84, die vorzugsweise als segmentartig aufgebauter (Stern-) Förderer ausgebildet ist, transportiert.

In der Seitenansicht der Fig. 3C ist ein Schnitt entlang der Linie 3C-3C der Fig. 3A durch den Zuführkanal 30-1 der Fig. 3A gezeigt. Die Fig. 3C dient der exemplarischen Verdeutlichung, dass die Kanäle 28 waagrecht und/oder geneigt angeordnet sein können. Der Zuführkanal 30-1 ist von der Rückseite 52 des Regals 82 abfallend zur Vorderseite 50 des Regals 82 orientiert. Der auch dem Zuführkanal 30-1 zugeordnete Abzugskanal 32-2 ist zur Rückseite 52 abfallend orientiert.

Aus den Seitenansichten der Fig. 3B und 3C wird deutlich, dass die Versorgung des Regals 82 mit den Lagerbehältern 18 auf unterschiedlichen oder gleichen Höhenniveaus (H0 bis H3) erfolgen kann. Es gibt Regalbediengeräte 24, die Lastaufnahmemittel 26 aufweisen, die wiederum mehrere Ebenen des Regals 82 gleichzeitig mit den Lagerbehältern 18 versorgen können. So ist es zum Beispiel in der Fig. 3B möglich, dass das Regalbediengerät 24 den Zuführkanal 30-6 belädt, während der Abzugskanal 32-3 entladen wird.

Die vorliegende Erfindung kann grundsätzlich mit jedem Förderertyp (zum Beispiel Rollenförderer, Gurtförderer, Kettenförderer, etc.) betrieben werden. Die Begriffe "Förderer" und "Fördertechnik" sind äquivalent zu verstehen. Eine Fördertechnik umfasst im Wesentlichen alle technischen und organisatorischen Einrichtungen zum Bewegen oder Transportieren von Fördergütern. Die Fördertechnik wird insbesondere im Bereich der Intralogistik eingesetzt.

Unter einem "Artikel" ist insbesondere ein Stückgut zu verstehen. Ein Artikel ist eine durch den Artikeltyp unterscheidbare (kleinste) Einheit eines Artikelsortiments. Stückgüter sind individualisierte, unterscheidbare Güter, die einzeln gehandhabt werden können und deren Bestand stückweise oder als Gebinde (Colli/Case) geführt wird. Das Gebinde ist ein allgemeiner Begriff für eine handhabbare Einheit, die manuell oder mittels technischem Gerät (Fördertechnik) bewegt werden kann. Auch eine Untermenge einer Ladeeinheit, zum Beispiel ein Getränkekasten auf einer voll mit Getränkekästen beladenen Palette, wird als Gebinde bezeichnet. Die Begriffe "Artikel", "Gebinde" und "Stückgut" werden hier äquivalent verwendet. Wenn einer der Artikel über die Fördertechnik transportiert wird, spricht man auch von einem Fördergut.

Ein "Kommissionierauftrag" liegt üblicherweise als Datensatz vor, der bearbeitet werden kann. Der Kommissionierauftrag kann ein Kopffeld, ein Prioritätsfeld und/oder ein Artikelfeld aufweisen. Das Kopffeld kann unter anderem Informationen zum Kunden, der eine Bestellung aufgegeben hat, zur (Kunden-) Adresse oder eine Kunden-Identifikationsnummer sowie eine Bestell-/Aufttragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-) Priorität, der üblicherweise vorrangig vor normalen Aufträgen behandelt wird.

Unter einem "Regalbediengerät" ist ein Förderzeug oder ein Bediengerät zu verstehen, das üblicherweise in einer Regalgasse zwischen zwei Regalen, meist schienengeführt, verfahrbar ist. Regalbediengeräte weisen üblicherweise ein Fahrwerk, einen oder mehrere Maste, ein Hubwerk sowie mindestens ein Lastaufnahmemittel auf. Eine Lastaufnahme erfolgt zum Beispiel bei Paletten über eine teleskopierbare Gabel und bei Behältern zum Beispiel durch Zugeinrichtungen (zum Beispiel Haken, Lasso oder Schwenkarm) oder mittels Gurtförderer.

Eine "Regalanordnung" (zum Beispiel ein Regallager) umfasst üblicherweise eine Vielzahl von Regalen, die in Form von Einzelregalen oder Doppelregalen vorgesehen sind. Doppelregale sind Einzelregale, die Rücken an Rücken aufgestellt sind. Zwischen den Regalen sind Regalgassen definiert, die üblicherweise in Längsrichtung der Regale verlaufen und als Aktionsraum für ein Regalbediengerät dienen. Die Regale enden an ihren, sich jeweils gegenüberliegenden, (kürzeren) Stirnseiten, die wiederum in einer Ebene senkrecht zur Längsrichtung der Regalgasse orientiert sind. Die Regale selbst weisen eine Vielzahl von (Regal-) Lagerplätzen bzw. Stellplätzen auf, die bei der vorliegenden Erfindung als Kanäle genutzt werden. Eine Regalspalte erstreckt sich in vertikaler Richtung innerhalb eines Regals und weist üblicherweise so viele Lager- bzw. Stellplätze übereinander auf, wie es Regalebenen gibt.

Unter einem "Fahrzeug" oder einem "Shuttle" wird ein Regalbediengerät verstanden, das im Wesentlichen eine (einzige) Regalebene bedient, um die Kanäle dieser Regalebene mit Lagereinheiten zu versorgen, d.h. die Lagerbehälter 18 ein- und auszulagern.

In der vorhergehenden Beschreibung der Erfindung wurden gleiche Teile und Merkmale mit den gleichen Bezugszeichen versehen, wobei in der gesamten Beschreibung enthaltene Offenbarungen sinngemäß auf gleiche Teile und Merkmale mit gleichen Bezugszeichen übertragen werden können. Lageangaben, wie zum Beispiel "oben", "unten", "seitlich", etc., sind auf die unmittelbar beschriebene Figur bezogen und bei einer Lageänderung sinngemäß auf die neue Lage zu übertragen.

Ferner ist zu beachten, dass Richtungsangaben und Orientierungen zugrunde gelegt wurden, die sich grundsätzlich an die in der (Intra-) Logistik üblichen Bezeichnungen anlehnen. Folglich wird die Längsrichtung (Förderrichtung) mit "X", die Tiefe (Querrichtung) mit "Z" und die (vertikale) Höhe mit "Y" bezeichnet. Beispielsweise kann den Figuren 1 und 2 ein damit korrespondierendes (kartesisches) Koordinatensystem XYZ entnommen werden.

## Patentansprüche

1. Kommissionierplatz (12) zum manuellen Kommissionieren von Artikeln (16) aus sortenrein oder fachunterteilt sortenrein beladenen Lagerbehältern (18) in zumindest einen Auftragsbehälter (20) gemäß einem Kommissionierauftrag, der aus mehreren verschiedenen Artikeln (16) bestehen kann, mit:
einer Vielzahl von Kanälen (28), die Zuführkanäle (30) und mindestens einen Abzugskanal (32) aufweisen, wobei jeder der Zuführkanäle (30) vorzugsweise eine Länge (L) aufweist, die zur Aufnahme von mindestens zwei der Lagerbehälter (18) hintereinander geeignet ist und wobei jeder der Zuführkanäle (30) ein Übergabeende (36) und ein Bereitstellungsende (38) aufweist;
einer Versorgungseinrichtung (22), mittels der die Lagerbehälter (18) aus einem Lager zu den Übergabeenden (36) der Zuführkanäle (30) transportierbar und mittels der die Lagerbehälter (18) an die Übergabeenden (36) übergebbar sind, wobei jedes der Übergabeenden (36) so angeordnet und eingerichtet ist, dass die Lagerbehälter (18) durch die Versorgungseinrichtung (22) automatisiert übergebbar sind;
einer Materialfluss-Steuerungseinrichtung (54), wobei die Materialfluss-Steuerungseinrichtung (54) eingerichtet ist, einen Materialfluss der Lagerbehälter (18) in den Kanälen (28) ausschließlich unidirektional zu regeln, wobei sich die Lagerbehälter (18) in den Zuführkanälen (30) entgegengesetzt zu den Lagerbehältern (18) in den Abzugskanälen (32) bewegen;
einem Kommissionierbereich (44), in welchem ein Kommissionierer (14) die Artikel (16) manuell aus dem oder den Lagerbehältern (18) entnimmt und an den zumindest einen Auftragsbehälter (20) abgibt; und
einem Transferbereich (46), in welchem die Lagerbehälter (18) zwischen der Versorgungseinrichtung (22) und den Kanälen (28), und umgekehrt, ausgetauscht werden;
wobei jeder der Abzugskanäle (32) ein Aufnahmeende (40) und ein Abgabeende (42) aufweist, wobei jedes der Abgabeenden (42) so angeordnet und eingerichtet ist, dass die Lagerbehälter (18) durch die Versorgungseinrichtung (22) automatisiert aufnehmbar sind;
wobei die Kanäle (28) in einem Regal (48; 82) angeordnet sind und sich im Wesentlichen in einer Querrichtung (Z) parallel zueinander erstrecken, wobei der Kommissionierbereich (44) entlang einer ersten Regallängsseite (50) angeordnet ist und der Transferbereich (46) entlang einer zweiten Regallängsseite (52) angeordnet ist, die gegenüberliegend zur ersten Regallängsseite (50) angeordnet ist;
**dadurch gekennzeichnet, dass**
jedem der Zuführkanäle (30) mindestens einer der Abzugskanäle (32) materialflusstechnisch zugeordnet ist; und
dass die Bereitstellungsenden (38) und die Aufnahmeenden (42) von einander zugeordneten Kanälen (28) in einer Längsrichtung (X) räumlich entweder direkt aneinander grenzen oder über mindestens einen Abschiebeplatz (60) miteinander verbunden sind, so dass die Lagerbehälter (18) in der Längsrichtung (X), ohne Anheben durch den Kommissionierer (14), von den Bereitstellungsenden (30) zu dem Aufnahmeende (40) des jeweils zugeordneten mindestens einen Abzugskanals (32) schiebbar oder förderbar sind.

2. Kommissionierplatz (12) nach Anspruch 1, wobei die Versorgungseinrichtung (22) eine Fördertechnik, ein Shuttle oder ein Regalbediengerät (24) ist.

3. Kommissionierplatz (12) nach einem der Ansprüche 1 oder 2, der ferner Abschiebeplätze (60) aufweist, wobei jeweils einer der Abschiebeplätze (60) einem der Bereitstellungsenden (38) oder der Aufnahmeenden (40) gegenüberliegt.

4. Kommissionierplatz (12) nach Anspruch 3, wobei die Abschiebeplätze (60) eine Abschiebestrecke (90) definieren.

5. Kommissionierplatz (12) nach einem der Ansprüche 3 oder 4, wobei an den Bereitstellungsenden (38) jeweils eine Stoppeinrichtung (72) vorgesehen ist.

6. Kommissionierplatz (12) nach einem der Ansprüche 3 bis 5, wobei die Abschiebeplätze (60) angetriebene oder nicht angetriebene Förderelemente sind.

7. Kommissionierplatz (12) nach einem der Ansprüche 3 bis 6, wobei die Abschiebeplätze (60) jeweils einen Riemenheber (62) aufweisen, der heb- und senkbar ausgebildet ist und der die Lagerbehälter (18) in einer Längsrichtung des gegenüberliegenden Kanals (28) fördert.

8. Kommissionierplatz (12) nach einem der Ansprüche 1 bis 7, wobei die Zuführkanäle (30) angetriebene oder nicht angetriebene Durchlaufkanäle sind.

9. Kommissionierplatz (12) nach einem der Ansprüche 1 bis 8, wobei die Abzugskanäle (32) angetriebene oder nicht angetriebene Durchlaufkanälen sind.

10. Kommissionierplatz (12) nach einem der Ansprüche 1 bis 9, der ferner eine Auftragsbehälter-Fördertechnik (84) aufweist, die durch den Kommissionierbereich (44) verläuft und die vorzugsweise aus Stauförderelementen gebildet ist.

11. Kommissionierplatz (12) nach einem der Ansprüche 1 bis 10, wobei die Materialfluss-Steuerungseinrichtung (54) eingerichtet ist, in einigen der einander zugeordneten Kanäle (28) die Auftragsbehälter (20) zum Kommissionierer (14) hin und vom Kommissionierer (14) weg zu transportieren.

12. Kommissionierplatz nach einem der Ansprüche 1 bis 11, wobei die Kanäle (28) sowohl für Lagerbehälter (18) als auch für Auftragsbehälter (20) nutzbar sind.

13. Kommissioniersystem (10; 80) mit einem Kommissionierplatz (12) nach einem der Ansprüche 1 bis 12.

14. Kommissioniersystem (10; 80) nach Anspruch 13, das ferner ein Lagerbehälter-Lager aufweist, das über die Versorgungseinrichtung (22) an die Kanäle (28) gekoppelt ist.

15. Verfahren zum manuellen Kommissionieren von Artikeln (16) aussortenreinen oder fachunterteilt sortenrein beladenen Lagerbehältern (18) gemäß einem Kommissionierauftrag in einen Auftragsbehälter (20) an einem Kommissionierplatz (12) gemäß einem der Ansprüche 1 bis 12, mit folgenden Schritten:
Zuführen der sortenrein oder fachunterteilt sortenrein beladenen Lagerbehälter (18) in einer vorgegebenen Sequenz in einen der Zuführkanäle (30);
Entnehmen des oder der Artikel (16) aus dem zugeführten Lagerbehälter (18);
Abgeben des oder der entnommenen Artikel (16) in den Auftragsbehälter (20);
Schieben oder Transportieren des Lagerbehälters (18), aus dem der oder die Artikel (16) entnommen wurden, in der Längsrichtung (X) von dem Zuführkanal (30) zum Abzugskanal (32);
Abführen des Lagerbehälters (18), aus dem der oder die Artikel (16) entnommen wurden, über den zugeordneten Abzugskanal (32);
wobei der Zuführkanal (30) und der zugeordnete Abzugskanal unidirektional entgegengesetzt betrieben werden.

## Claims

1. An order-picking station (12) for the manual picking of articles (16) from storage containers (18), which are loaded by one article type only or by one article type in each container compartment, into at least one order container (20) in accordance with a picking order, which may consist of a plurality of different articles (16), comprising:
a plurality of channels (28) comprising feeding channels (30) and at least one discharging channel (32), wherein each of the feeding channels (30) preferably comprises a length (L) suitable for receiving at least two of the storage containers (18) one behind the other, and wherein each of the feeding channels (30) comprises a transfer end (36) and a provision end (38);
a supply device (22) by means of which the storage containers (18) can be transported from a warehouse to the transfer ends (36) of the feeding channels (30) and by means of which the storage containers (18) can be transferred to the transfer ends (36), wherein each of the transfer ends (36) is arranged and configured such that the storage containers (18) are transferable in an automated manner by the supply device (22);
a material-flow control device (54), wherein the material-flow control device (54) is configured to control a material flow of the storage containers (18) within the channels (28) exclusively unidirectionally, wherein the storage containers (18) in the feeding channels (30) move oppositely to the storage containers (18) in the discharging channels (32);
an order-picking region (44) in which a picking person (14) manually picks the articles (16) from the one or more of the storage containers (18) and manually delivers the articles to the at least one order container (20); and
a transfer region (46) in which the storage containers (18) are exchanged between the supply device (22) and the channels (28), and vice versa;
wherein each of the discharging channels (32) comprises a receipt end (40) and a delivery end (42), wherein each of the delivery ends (42) is arranged and configured such that the storage containers (18) are receivable by the supply device (22) in an automated manner;
wherein the channels (28) are arranged in a rack (48; 82) and extend substantially in a transversal direction (Z) in parallel to each other, wherein the order-picking region (44) is arranged along a first longitudinal rack side (50) and the transfer region (46) is arranged along a second longitudinal rack side (52) being arranged oppositely to the first longitudinal rack side (50);
**characterized in that**
each of the feeding channels (30) has assigned at least one of the discharging channels (32) in terms of the material flow; and
that the provision ends (38) and the delivery ends (42) of channels (28), which are assigned to each other, are either spatially arranged directly adjacent, or are connected, to each other via at least one push-away location so that the storage containers (18) can be pushed, or conveyed, without lifting by the picking person (14), from the provision ends (30) to the receipt end (40) of the respectively assigned at least one discharging channel (32).

2. The order-picking station (12) of claim 1, wherein the supply device (22) is a conveyor system, a shuttle, or a storage and retrieval device (24).

3. The order-picking station (12) of one of the claims 1 or 2, further comprising push-away locations (60), wherein respectively one of the push-away locations (60) is arranged oppositely to one of the provision ends (38) or the receipt ends (40).

4. The order-picking station (12) of claim 3, wherein the push-away locations (60) define a push-away line (90).

5. The order-picking station (12) of one of the claims 3 or 4, wherein respectively one stopping device (72) is provided at the provision ends (38).

6. The order-picking station (12) of one of the claims 3 to 5, wherein the push-away locations (60) are driven, or non-driven, conveying elements.

7. The order-picking station (12) of one of the claims 3 to 6, wherein the push-away locations (60) respectively comprise a belt lifter (62) which is configured to be lifted or lowered and which conveys the storage containers (18) in a longitudinal direction of the oppositely arranged channel (28).

8. The order-picking station (12) of one of the claims 1 to 7, wherein the feeding channels (30) are driven, or non-driven, flow channels.

9. The order-picking station (12) of one of the claims 1 to 8, wherein the discharging channels (32) are driven, or non-driven, flow channels.

10. The order-picking station (12) of one of the claims 1 to 9, further comprising an order-container conveying system (84) which extends through the order-picking region (44) and which is preferably formed by accumulation-conveyor elements.

11. The order-picking station (12) of one of the claims 1 to 10, wherein the material-flow control device (54) is configured to transport the order containers (20) in some of the channels (28), which are assigned to each other, towards the picking person (14) and away from the picking person (14).

12. The order-picking station of one of the claims 1 to 11, wherein the channels (28) are usable for both the storage containers (18) and the order containers (20).

13. An order-picking system (10; 80) comprising the order-picking station (12) of one of the claims 1 to 12.

14. The order-picking system (10; 80) of claim 13 further comprising a storage-container warehouse coupled to the channels (28) via the supply device (22).

15. A method for the manual picking of articles (16) from order containers (18), which are loaded preferably by one article type only or by one article type in each container compartment, in accordance with a picking order into an order container (20) at an order-picking station (12) in accordance with one of the claims 1 to 12, comprising the steps of:
feeding the storage containers, which are loaded preferably by one article type only or by one article type in each container compartment, in a preset sequence into one of the feeding channels (30);
removing the article, or articles, (16) from the fed storage container (18);
delivering the removed article, or articles, (16) to the order container (20);
pushing, or transporting, the storage container (18), from which the article, or articles, (16) have been removed, in the longitudinal direction (X) from the feeding channel (30) to the discharging channel (32);
discharging the storage container (18), from which the article, or articles, (16) have been removed, via the assigned discharging channel (32);
wherein the feeding channel (30) and the assigned discharging channel are operated unidirectionally in opposite directions.

## Revendications

1. Poste de préparation de commandes (12) pour la préparation manuelle de commandes d'articles (16) à partir de récipients de stockage (18) chargés selon leur nature ou selon leur nature par compartiment dans au moins un récipient de commande (20) selon une demande de préparation de commandes, qui peut se composer de plusieurs articles différents (16), avec:
une multiplicité de canaux (28), qui présentent des canaux d'arrivée (30) et au moins un canal de départ (32), dans lequel chacun des canaux d'arrivée (30) présente de préférence une longueur (L), qui convient pour recevoir l'un derrière l'autre au moins deux des récipients de stockage (18) et dans lequel chacun des canaux d'arrivée (30) présente une extrémité de remise (36) et une extrémité de mise à disposition (38);
un dispositif d'alimentation (22), au moyen duquel les récipients de stockage (18) peuvent être transportés depuis un magasin jusqu'aux extrémités de remise (36) des canaux d'arrivée (30) et au moyen duquel les récipients de stockage (18) peuvent être cédés aux extrémités de remise (36), dans lequel chacune des extrémités de remise (36) est agencée et conçue de telle manière que les récipients de stockage (18) puissent être cédés de façon automatisée par le dispositif d'alimentation (22);
un dispositif de commande du flux de matière (54), dans lequel le dispositif de commande du flux de matière (54) est conçu pour réguler de façon exclusivement unidirectionnelle un flux de matière des récipients de stockage (18) dans les canaux (28), dans lequel les récipients de stockage (18) se déplacent dans les canaux d'arrivée (30) en sens contraire des récipients de stockage (18) dans les canaux de départ (32);
une zone de préparation de commandes (44), dans laquelle un préparateur (14) prélève manuellement les articles (16) hors du ou des récipient(s) de stockage (18) et les dépose sur ledit au moins un récipient de commande (20); et
une zone de transfert (46), dans laquelle les récipients de stockage (18) sont échangés entre le dispositif d'alimentation (22) et les canaux (28), ou inversement;
dans lequel chacun des canaux de départ (32) présente une extrémité de réception (40) et une extrémité de cession (42), dans lequel chacune des extrémités de cession (42) est agencée et conçue de telle manière que les récipients de stockage (18) puissent être repris de façon automatisée par le dispositif d'alimentation (22);
dans lequel les canaux (28) sont agencés dans un rayonnage (48; 82) et s'étendent essentiellement dans une direction transversale (Z) parallèlement les uns aux autres, dans lequel la zone de préparation de commandes (44) est disposée le long d'un premier long côté du rayonnage (50) et la zone de transfert (46) est disposée le long d'un deuxième long côté du rayonnage (52), qui est disposé à l'opposé du premier long côté du rayonnage (50);
**caractérisé en ce que**
au moins un des canaux de départ (32) est associé, selon la technique du flux de matière, à chacun des canaux d'arrivée (30); et
les extrémités de mise à disposition (38) et les extrémités de réception (42) de canaux (28) associés l'un à l'autre sont, dans une direction longitudinale (X), soit directement adjacentes l'une à l'autre spatialement soit raccordées l'une à l'autre par au moins un poste de poussée (60), de telle manière que les récipients de stockage (18) puissent être glissés ou transportés dans la direction longitudinale (X), sans être soulevés par le préparateur (14), des extrémités de mise à disposition (30) vers l'extrémité de réception (40) dudit au moins un canal de départ (32) respectivement associé.

2. Poste de préparation de commandes (12) selon la revendication 1, dans lequel le dispositif d'alimentation (22) est un mécanisme de transport, une navette ou un appareil de desserte de rayonnage (24).

3. Poste de préparation de commandes (12) selon une des revendications 1 ou 2, qui présente en outre des postes de poussée (60), dans lequel un des postes de poussée (60) est respectivement situé en face d'une des extrémités de mise à disposition (38) ou des extrémités de réception (40).

4. Poste de préparation de commandes (12) selon la revendication 3, dans lequel les postes de poussée (60) définissent une zone de poussée (90).

5. Poste de préparation de commandes (12) selon une des revendications 3 ou 4, dans lequel il est prévu chaque fois un dispositif d'arrêt (72) aux extrémités de mise à disposition (38).

6. Poste de préparation de commandes (12) selon une des revendications 3 à 5, dans lequel les postes de poussée (60) sont des éléments de transport entraînés ou non entraînés.

7. Poste de préparation de commandes (12) selon une des revendications 3 à 6, dans lequel les postes de poussée (60) présentent respectivement un élévateur à courroie (62), qui peut être soulevé ou abaissé, et qui transporte les récipients de stockage (18) dans une direction longitudinale du canal opposé (28).

8. Poste de préparation de commandes (12) selon une des revendications 1 à 7, dans lequel les canaux d'arrivée (30) sont des canaux continus entraînés ou non entraînés.

9. Poste de préparation de commandes (12) selon une des revendications 1 à 8, dans lequel les canaux de départ (32) sont des canaux continus entraînés ou non entraînés.

10. Poste de préparation de commandes (12) selon une des revendications 1 à 9, qui présente en outre un mécanisme de transport de récipients de commande (84), qui traverse la zone de préparation de commandes (44) et qui est de préférence formé d'éléments de transport à accumulation.

11. Poste de préparation de commandes (12) selon une des revendications 1 à 10, dans lequel le dispositif de commande du flux de matière (54) est conçu pour transporter les récipients de commande (20) dans quelques-uns des canaux associés (28) associés les uns aux autres, vers le préparateur de commandes (14) et au départ du préparateur de commandes (14).

12. Poste de préparation de commandes (12) selon une des revendications 1 à 11, dans lequel les canaux (28) sont utilisables aussi bien pour des récipients de stockage (18) que pour des récipients de commande (20).

13. Système de préparation de commandes (10; 80) avec un poste de préparation de commandes (12) selon une des revendications 1 à 12.

14. Système de préparation de commandes (10; 80) selon la revendication 13, qui présente en outre un magasin de récipients de stockage, qui est couplé aux canaux (28) par le dispositif d'alimentation (22).

15. Procédé pour la préparation manuelle de commandes d'articles (16) à partir de récipients de stockage (18) chargés selon leur nature ou selon leur nature par compartiment selon une demande de préparation de commandes dans au moins un récipient de commande (20) à un poste de préparation de commandes (12) selon une des revendications 1 à 12, comprenant les étapes suivantes:
envoyer les récipients de stockage (18) chargés selon leur nature ou selon leur nature par compartiment selon une séquence prédéterminée dans un des canaux d'arrivée (30);
prélever le ou les article(s) (16) hors du récipient de stockage envoyé (18);
déposer le ou les article(s) prélevés (16) dans le récipient de commande (20);
pousser ou transporter le récipient de stockage (18), hors duquel le ou les article(s) (16) a/ont été prélevé(s), dans la direction longitudinale (X) du canal d'arrivée (30) vers le canal de départ (32);
évacuer le récipient de stockage (18), hors duquel le ou les article(s) (16) a/ont été prélevé(s), par le canal de départ associé (32);
dans lequel le canal d'arrivée (30) et le canal de départ associé fonctionnent en sens contraire de façon unidirectionnelle.
